# EUROPEAN PATENT SPECIFICATION

(11) **EP 3 296 564 B1**
(45) Date of publication and mention of the grant of the patent: **29.07.2020**
(21) Application number: 16792454.7
(22) Date of filing: 06.04.2016
(51) Int. Cl.: F03D 17/00, F03D 1/06, F03D 13/20, F16H 1/10, F16H 1/22, F16H 57/01, F16H 35/10, F16H 57/02

(54) **DRIVE DEVICE FOR WIND TURBINES, DRIVE DEVICE UNIT FOR WIND TURBINES, AND WIND TURBINE**
ANTRIEBSVORRICHTUNG FÜR WINDTURBINEN, ANTRIEBSEINHEIT FÜR WINDTURBINEN UND WINDTURBINE
DISPOSITIF D'ENTRAÎNEMENT POUR ÉOLIENNES, UNITÉ DE DISPOSITIF D'ENTRAÎNEMENT POUR ÉOLIENNES, ET ÉOLIENNE

(30) Priority: 12.05.2015 JP 2015097710
(43) Date of publication of application: 21.03.2018
(73) Proprietor: Nabtesco Corporation, Tokyo 102-0093 (JP)
(72) Inventor: NOHARA Osamu, Fuwa-gun Gifu 503-2121 (JP)
(74) Representative: Grünecker Patent- und Rechtsanwälte PartG mbB
(86) International application number: PCT/JP2016/061313
(87) International publication number: WO 2016/181729

(56) References cited:
- WO-A1-2014/005735
- WO-A1-2014/005735
- JP-A- 2011 047 307
- JP-A- 2011 047 307
- US-A- 5 278 773
- US-A1- 2010 052 320
- US-A1- 2011 158 806
- US-A1- 2012 134 809

## Description

### FIELD OF THE INVENTION

The present invention relates to a windmill drive apparatus and a windmill drive apparatus unit, which are used in a movable part of a windmill, and a windmill.

### BACKGROUND ART

As disclosed in JP 2001 289149 A, as a windmill used as a wind turbine generator, there is known a windmill including a nacelle rotatably installed on a top part of a tower, in which a generator, etc., is disposed, and a blade installed so as to be rotatable with respect to a rotor (hub, main shaft) disposed on the nacelle. The windmill has a yaw drive apparatus or a pitch drive apparatus, as a windmill drive apparatus that drives to rotate a movable part of the windmill with respect to another structure of the windmill. The yaw drive apparatus drives to rotate the nacelle which is one structure, with respect to the tower which is the other structure, so as to turn the nacelle depending on a direction of the wind. The pitch drive apparatus drives a shaft part of the blade which is one structure, with respect to the rotor on the nacelle, which is the other structure, so as to adjust a pitch angle of the blade.

JP 2011 047307 A also discloses a windmill drive apparatus.

In general, a plurality of the windmill drive apparatuses are provided on one movable part of the windmill. In this windmill, there is a possibility that an output shaft of one of the windmill drive apparatuses provided on the one movable part is maintained in a fixed state because of some trouble or other. Upon this trouble, when the fixed output shaft of the windmill drive apparatus in trouble and a ring gear are meshed, the movable part becomes locked. In the locked state, when another normal windmill drive apparatus(es) is operated, one of the windmill drive apparatus and the ring gear is damaged. When the windmill drive apparatus is damaged, the windmill can be activated again by replacing the damaged windmill drive apparatus. On the other hand, when the ring gear or a part around the ring gear is damaged, a large-scale repair work is needed. In this case, the running of the windmill is stopped for a long period of time. In order to avoid such an accident, it is important to detect a trouble state of the windmill drive apparatus promptly and precisely.

### SUMMARY OF THE INVENTION

The present invention has been made in view of the above circumstances, and the object of the present invention is to detect a trouble state of a windmill drive apparatus promptly and precisely.

A windmill drive apparatus according to the present invention comprises:
a drive apparatus body installed on one structure in a movable part of a windmill, the drive apparatus body having a meshing part configured to be meshed with a ring gear installed on another structure of the windmill, which structure is different from the movable part;
a fastener configured to fix the drive apparatus body to the one structure; and
a sensor configured to measure a change in state of the fastener.

In the windmill drive apparatus according to the present invention,
the sensor may be configured to measure at least one or more of:
a change in state of the fastener in a tangent direction with respect to a circumference about a central axis of the ring gear;
a change in state of the fastener in a radial direction about the central axis of the ring gear; and
a change in state of the fastener in a direction parallel to the central axis of the ring gear.

In the windmill drive apparatus according to the present invention, the sensor may be configured to measure at least one or more of a change in state of the fastener in a direction parallel to an axis of the fastener, and a change in state of the fastener in a direction perpendicular to the axis of the fastener.

In the windmill drive apparatus according to the present invention,
the drive apparatus body may include a case having a flange through which the fastener penetrates, and an output shaft having the meshing part and supported on the case;
the fastener may include a plurality of the fasteners arranged on a circumference about an axis of the output shaft; and
the sensor may include discrete sensors configured to measure a change in state of the fastener and being provided correspondingly to each of the fasteners.

In the windmill drive apparatus according to the present invention,
the drive apparatus body may include a case having a flange through which the fastener penetrates, and an output shaft having the meshing part and supported on the case;
the fastener may include a plurality of the fasteners arranged on a circumference about an axis of the output shaft; and
the sensor may be configured to measure a change in state of at least one fastener of a fastener located at a positon nearest to one side along the circumference about the central axis of the ring gear, a fastener located at a position nearest to the other side along the circumference about the central axis of the ring gear, a fastener located at a position farthest from the central axis of the ring gear along a radial direction about the central axis, and a fastener located at a position nearest to the central axis of the ring gear along the radial direction about the central axis.

In the windmill drive apparatus according to the present invention, the sensor may be configured to measure at least one or more of a load applied to the fastener, and a displacement or a position of the fastener.

A windmill drive apparatus unit according to the present invention comprises a plurality of windmill drive apparatuses provided on one movable part of a windmill,
wherein:
each of the windmill drive apparatuses may be the aforementioned windmill drive apparatus according to the present invention; and
the sensor may include discrete sensors configured to measure a change in state of the fastener for mounting the windmill drive apparatus and being provided correspondingly to each of the windmill drive apparatuses.

A windmill according to the present invention comprises the aforementioned windmill drive apparatus according to the present invention, or the aforementioned windmill drive apparatus unit according to the present invention.

According to the present invention, a trouble state of the windmill drive apparatus can be detected promptly and precisely.

### BRIEF DESCRIPTION OF THE DRAWINGS

Fig. 1 is a perspective view of a windmill, for explaining an embodiment of the present invention.
Fig. 2 is a vertical sectional view of the windmill shown in Fig. 1, showing a part between a tower and a nacelle.
Fig. 3 is a plan view showing a layout of windmill drive apparatuses in the part shown in Fig. 2.
Fig. 4 is a partial sectional view of the windmill drive apparatus shown in Fig. 2.
Fig. 5 is a partial sectional view of a mounting part of the windmill drive apparatus shown in Fig. 4.
Fig. 6 is a plan view of an arrangement of fasteners for mounting the windmill drive apparatus shown in Fig. 4.

### DETAILED DESCRIPTION OF THE INVENTION

An embodiment of the present invention will be described herebelow with reference to the drawings. In the drawings attached to the specification, a scale size, an aspect ratio and so on are changed and exaggerated from the actual ones, for the convenience of easiness in illustration and understanding.

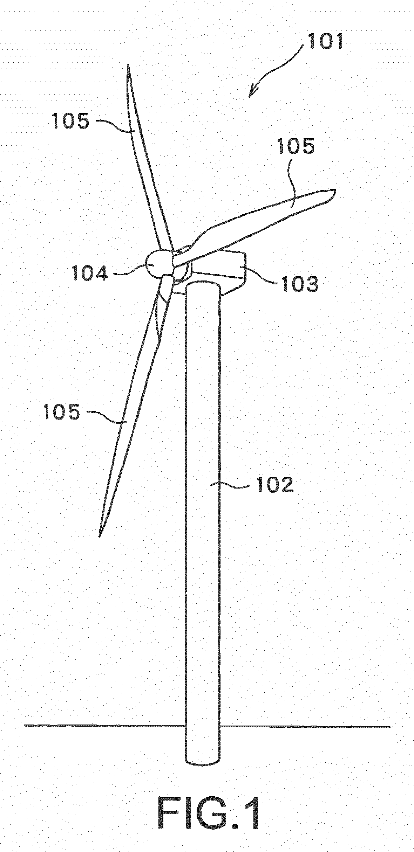

Figs. 1 to 6 are views for explaining an embodiment of the present invention. A windmill drive apparatus 10 explained herein drives a nacelle 103 installed so as to be rotatable with respect to a tower 102 of a windmill 101, or a blade 105 installed so as to be swingable in a pitch direction with respect to a rotor 104 fixed to the nacelle 103. Namely, the windmill drive apparatus 10 explained herein can be used as a yaw drive apparatus that yaw-drives to rotate the nacelle 103 with respect to the tower 102 of the windmill 101, and further can be used as a pitch drive apparatus that pitch-drives to rotate a shaft of the blade 105 with respect to the rotor 104 on the nacelle. However, in the illustrated example described below, the windmill drive apparatus functions as a yaw drive apparatus.

As shown in Fig. 1, the windmill 101 includes the tower 102, the nacelle 103, the rotor 104 as a main shaft part, the blade 105 and so on. The tower 102 is installed to extend vertically upward from the ground. The nacelle 103 is installed so as to be rotatable with respect to a top part of the tower 102. The rotation of the nacelle 103 with respect to the tower 102 is a rotation about a longitudinal direction of the tower 102, which is so-called the yaw rotation. The nacelle 103 is driven by a windmill drive apparatus 10, which will be described in detail later, so as to rotate with respect to the tower 102. A power transmission axis, an electric generator and so on are disposed inside the nacelle 103. The rotor 104 is connected to the power transmission axis and is rotatable with respect to the nacelle 103. A plurality of (three in the example shown in Fig. 1) the blades 105 are provided. The blades 105 extend from the rotor 104 in a radial direction about an axis of rotation of the rotor 104 with respect to the nacelle 103. The blades 105 are equiangularly spaced apart from each other.

Each blade 105 is rotatable in a pitch direction. In other words, each blade 105 is rotatable about its longitudinal direction with respect to the rotor 104. Namely, a connection portion of the blade 105 to the rotor 104 is a movable part. The blades 105 are driven in rotation by a windmill drive apparatus provided as a pitch drive apparatus. The windmill drive apparatus as a pitch drive apparatus has the same structure as that of the windmill drive apparatus 10 as a yaw drive apparatus which will be described later.

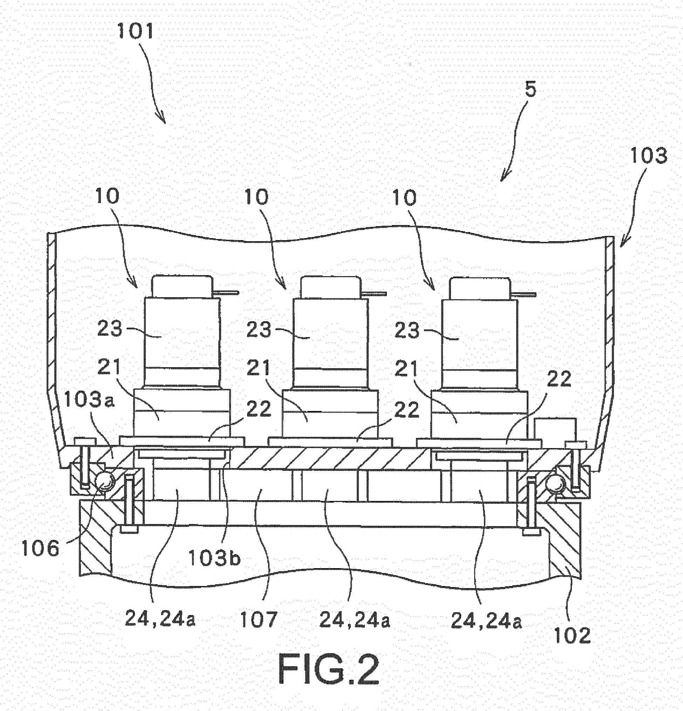

Fig. 2 is a sectional view in enlargement of a part where the nacelle 103 is installed so as to be rotatable with respect to the tower 102 in the windmill 101. Fig. 2 shows the windmill drive apparatus 10 not in a sectional view but in an outline view. The nacelle 103 is rotatably installed, at a bottom part 103a thereof, on the top part of the tower 102, through a bearing 106. A ring gear 107 having inner teeth formed on an inner circumference thereof is fixed on the top part of the tower 102. Not limited to the inner circumference, the teeth may be provided on an outer circumference. In the drawings, illustration of each inner tooth of the ring gear 107 is omitted.

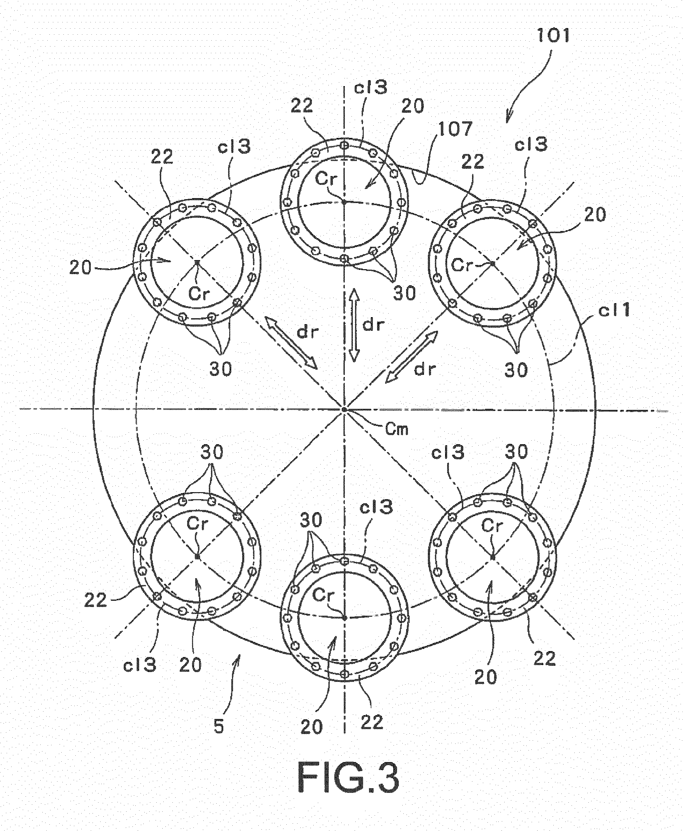

As shown in Figs. 2 and 3, a plurality of the windmill drive apparatus 10 are mounted inside the nacelle 103. The windmill drive apparatus 10 has a meshing part 24a configured to be meshed with the inner teeth of the ring gear 107. By the driving of the windmill drive apparatus 10, the nacelle 103 which is the movable part of the windmill 101 can be rotated with respect to the tower 102 which is the other structure of the windmill 101 different from the movable part. As shown in Fig. 3, the ring gear 107 has a circumferential shape, and has a central axis Cm. The nacelle 103 is rotated about the central axis Cm of the ring gear 107. In the illustrated example, the central axis Cm of the ring gear 107 conforms to the longitudinal axis of the tower 102. Herebelow, a direction parallel to the central axis Cm of the ring gear 107 is also referred to simply as "axial direction dl".

As shown in Fig. 3, the illustrated windmill 101 is provided with a pair of windmill drive apparatus units 5. The pair of windmill drive apparatus units 5 are arranged rotation-symmetrically about the central axis Cm of the ring gear 107. Each windmill drive apparatus unit 5 includes the three windmill drive apparatuses 10. The six drive apparatus bodies 20 in total included in the pair of windmill drive apparatus unit 5 are disposed along a circumference cl1 (see Fig. 3) about the central axis Cm of the ring gear 107. The three windmill drive apparatuses 10 included in each windmill drive apparatus unit 5 are arranged along the circumference cl1 with a predetermined gap therebetween.

The windmill drive apparatus 10 has the drive apparatus body 20 fixed on the nacelle 103, and a fastener 30 for fixing the drive apparatus body 20 to the nacelle 103. Further, the windmill drive apparatus 10 described herein has a sensor 40 for detecting a trouble of the drive apparatus body 20. The sensor 40 is configured to measure a change in state of the fastener 30. As described below, the use of the sensor 40 enables a trouble state of the drive apparatus body 20 to be detected promptly and precisely. Herebelow, the respective constituent elements of the windmill drive apparatus 10 are described one by one.

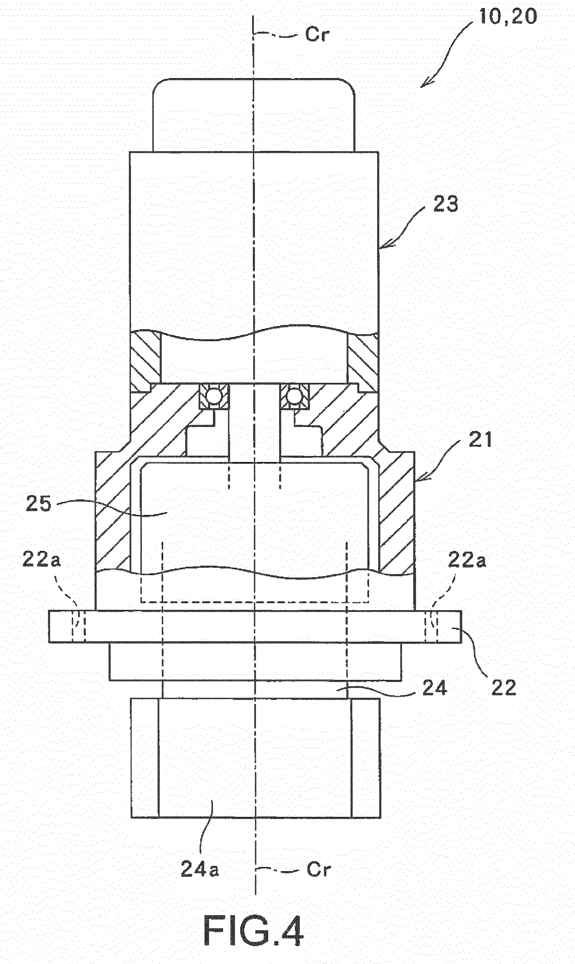

Firstly, the drive apparatus body 20 is described. As shown in Fig. 4, the drive apparatus body 20 has an output shaft 24 which has the meshing part 24a to be meshed with the ring gear 107, a case 21 which rotatably holds the output shaft 24 and an electric motor 23 fixed on the case 21. The drive apparatus body 20 further has a connection part 25 which connects the electric motor 23 and the output shaft 24. The connection part 25 is accommodated in the case 21. For example, the connection part 25 decelerates an input from the electric motor and transmits the input to the output shaft 24. As such a connection part 25, a speed reduction mechanism of an eccentric pivotable gear type or a planetary gear type, or a speed reduction mechanism of a combination of an eccentric pivotable gear type and a planetary gear type can be employed.

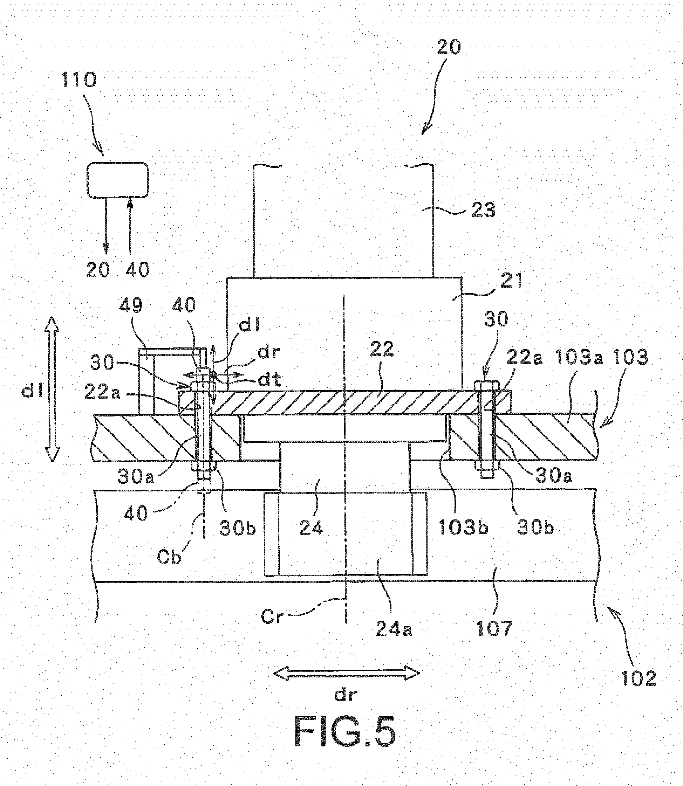

As shown in Fig. 4, an end of the output shaft 24, which is a side distant from the connection part 25, extends from the case 21. The meshing part 24a is formed on a portion of the output shaft 24 extending from the case 21. As shown in Figs. 2 and 5, the meshing part 24a of the output shaft 24 extends into a through-opening 103b formed in a bottom part 103a of the nacelle 103 so as to be meshed with the ring gear 107. The meshing part 24a is formed to have a shape corresponding to the ring gear 107. For example, the meshing part 24a forms a pinion gear having outer teeth to be meshed with the inner teeth of the ring gear 107. The windmill drive apparatus 10 has the longitudinal axis conforming to an axis of rotation Cr of the output shaft 24. Under conditions that the windmill drive apparatus 10 is fixed on the nacelle 103, the axis of rotation Cr of the output shaft 24 is parallel to the axial direction dl of the windmill 101.

Next, the case 21 is described. As shown in Fig. 4, the case 21 has a cylindrical shape. As shown in Fig. 5, the case 21 is arranged such that its longitudinal axis is positioned on the axis of rotation Cr. Both ends of the case 21 along the axis of rotation Cr are opened. The meshing part 24a of the output shaft 24 is exposed from the opening of the case 21 on the side of the tower 102. The electric motor 23 is attached to the opening of the case 21 on the opposite side of the tower 102. In addition, the case 21 has a flange 22. As shown in Fig. 3, the flange 22 has an annular shape, and extends along the circumference cl3 about the axis of rotation Cr of the output shaft 24. As shown in Figs. 4 and 5, the flange 22 has a through-hole 22a formed therein. The through-hole includes a plurality of the through-hole 22a formed on a circumference about the axis of rotation Cr of the output shaft 24. In the illustrated example, the twelve through-holes 22a are formed. As shown in Figs. 4 and 5, each through-hole 22a extends in the axial direction dl.

Next, the fastener 30 for fixing the drive apparatus body 20 as structured above to the nacelle 103 is described. The fastener 30 passes through the through-hole 22a formed in the flange 22 of the drive apparatus body 20 to penetrate through the flange 22. The bottom part 103a of the nacelle 103 has a through-aperture 103c at a position facing the through-hole 22a of the flange 22. The fastener 30 passes through the through-hole 22a of the drive apparatus body 20 and further extends into the through-aperture 103c of the nacelle 103. In the illustrated example, the fastener 30 has a bolt 30a and a nut 30b. The bolt 30a penetrates through the drive apparatus body 20 of the windmill drive apparatus 10 and the bottom part 103a of the nacelle 103. The nut 30b is threadedly engaged with the bolt 30a, which penetrates through the drive apparatus body 20 and the nacelle 103 in this order, from the side of the nacelle 103. In the illustrated example, the through-aperture 103c of the nacelle 103 includes the twelve through-apertures 103c formed correspondingly to the through-holes 22a. The fastener 30 composed of the bolt 30a and the nut 30b is provided for each of the through-holes 22a of the drive apparatus body 20. As a result, the drive apparatus body 20 is attached to the nacelle 103 by the twelve fasteners 30 at twelve positions.

Not limited to the illustrated example, instead of using the nut 30b, an internal screw, with which an external screw of the bolt 30a is threadedly engaged, may be formed in the through-aperture 103c of the nacelle 103. In this example, the fastener 30 is constituted by the bolt 30a. By meshing the bolt 30a with the through-aperture 103c of the nacelle 103, the drive apparatus body 20 can be fixed to the nacelle 103.

Next, the sensor 40 is described. The sensor 40 measures a change in state of the fastener 30. The sensor 40 may be constituted by a known sensor configured to measure one or more of a load applied to the fastener 30, a displacement of the fastener 30 with respect to the nacelle 103, and a relative position of the fastener 30 with respect to the nacelle 103. In the illustrated example, an axial force senor is used as the sensor 40, which allows measurement of a load applied to the fastener 30 in a predetermined direction. As another example, by using a magnetic sensor or a photoelectric sensor as the sensor 40, a position and a displacement of the fastener 30 can be measured in a contactless manner.

As shown in Fig. 5, the sensor 40 is fixedly held on the one structure of the movable part, i.e., nacelle 103 by means of a jig 49. The axial force sensor forming the sensor 40 bears against a head part of the bolt 30a forming the fastener 30. However, not limited to this example, as shown by the two-dot chain lines in Fig. 5, the sensor 40 may bear against a distal end of the bolt 30a on the opposite side of the head part. Alternatively, the sensor 40 may bear against the nut 30b.

The sensor 40 is electrically connected to a control unit 110. An electric signal related to a measurement result outputted from the sensor 40 is transmitted to the control unit 110. Since the control unit 110 monitors the electric signal outputted from the sensor 40, a change in load applied to the fastener 30 or a displacement of the fastener 30 can be known. Based on the measurement result of the sensor 40, the control unit 110 controls a constituent element of the windmill 101, such as the windmill drive apparatus 10.

Next, an operation of the windmill drive apparatus 10 as structured above is described.

In the windmill 101 having the aforementioned structure, when the movable parts such as the nacelle 103 and the blades 105 are rotated, the windmill drive apparatuses 10 included in the drive apparatus unit 5 are operated synchronically. Thus, the nacelle 103 and the blades 105, which are heavy loads, can be turned with respect to the tower 102 and the rotor 104, respectively. Each of the windmill drive apparatuses 10 is operated based on a control signal from the control unit 110.

As described above, in the movable parts of the windmill 101, there is a possibility that only one or two of the windmill drive apparatuses 10 included in the windmill drive apparatus unit 5 has a trouble, and that this windmill drive apparatus 10 is left stopped. Further, there is a possibility that detection of this trouble is delayed, so that the control unit 110 transmits a drive signal to the windmill drive apparatus 10 included in the windmill drive apparatus unit 5. At this time, the meshing part 24a the windmill drive apparatus 10 in trouble is meshed with the ring gear 107, whereby the movement of the movable part is restricted. Thus, when the meshing part 24a of the other normal windmill drive apparatus 10 included in the windmill drive apparatus unit 5 is operated, a large stress is generated between the meshing part 24a of the windmill drive apparatus 10 and the ring gear 107. That is to say, unless the trouble state of the windmill drive apparatus 10 is promptly detected, the windmill drive apparatus 10 or the ring bear 107 is damaged. When the windmill drive apparatus 10 is damaged, the windmill can be activated again by replacing the damaged windmill drive apparatus 10. On the other hand, when the ring gear 107 or a part around the ring gear 107 of the tower 102 is damaged, a large-scale repair work is needed. In this case, the running of the windmill is stopped for a long period of time, which invites serious loss.

In order to avoid such an accident, the windmill drive apparatus 10 has the sensor. The sensor 40 measures a change in state of the fastener 30 for mounting the windmill drive apparatus 10 on one structure of the movable part of the windmill 101, e.g., nacelle 103. The sensor 40 transmits an electric signal indicating the state of the fastener 30 to the control unit 110. The control unit 110 monitors the electric signal transmitted from the senor 40, whereby a trouble of the windmill drive apparatus 10 can be detected. When a trouble is detected, the control unit 110 gives an alarm or the like informing occurrence of the trouble, and stops the driving of the windmill drive apparatus 10. Therefore, the windmill drive apparatus 10 and the ring gear 107 can be avoided from being further damaged.

Particularly in this embodiment, a change in state of the fastener 30 is measured. After simulations had been carried out repeatedly, the following tendency was confirmed. Namely, when one of the windmill drive apparatuses 10 was left in trouble and the other normal windmill drive apparatuses 10 were driven, a large load was applied to the fastener 30 that mounted the windmill drive apparatus 10 to the structure, and the fastener 30 became damaged. This tendency corresponds to a malfunction that actually occurs during the running of the windmill. In the first place, when the state of the fastener 30 changes to a large extent, the windmill drive apparatus 10 relatively moves with respect to the windmill body, so that the mounting state of the windmill drive apparatus 10 changes to a large extent. At this time, a large load is applied to the windmill drive apparatus 10, the ring gear 107 or the structure around the ring gear 107. Thus, with the use of the sensor 40 that measures a change in state of the fastener 30, a trouble state of the windmill drive apparatus 10 can be detected promptly and precisely.

Preferably, such a sensor 40 detects at least one or more of a change in state of the fastener 30 in a tangent direction dt with respect to a circumference cl6 about the central axis Cm of the ring gear 107, a change in state of the fastener 30 in the radial direction dr about the central axis Cm of the ring gear, and a change in state of the fastener 30 in the axial direction dl parallel to the central axis Cm of the ring gear 107. Upon relative movement of the meshing part 24a of the windmill drive apparatus 10 and the ring gear 107, the state of the fastener 30 is likely to experience a largest change in any of the tangent direction dt, the radial direction dr and the axial direction dl. Thus, due to the sensor 40 configured to detect at least one or more of a change in state of the fastener 30 in the tangent direction dt, a change in state of the fastener 30 in the radial direction dr, and a change in state of the fastener 30 in the axial direction dl, a trouble state of the windmill drive apparatus 10 can be detected more promptly and more precisely. Further, when the sensor 40 detects all of a change in state of the fastener 30 in the tangent direction dt, a change in state of the fastener 30 in the radial direction dr, and a change in state of the fastener 30 in the axial direction dl, a trouble state of the windmill drive apparatus 10 can be detected significantly promptly and significantly precisely.

When the fastener 30 is a member having a longitudinal axis, such as a bolt, the fastener 30 is likely to largely change in state in a direction parallel to the axis Cb or in a direction perpendicular to the axis Cb. Thus, in consideration of the shape of the fastener 30, it is preferable that the sensor 40 measures at least one or more of a change in state of the fastener 30 in the direction parallel to the axis Cb of the fastener 30, and a change in state of the fastener 30 in the direction perpendicular to the axis Cb of the fastener 30.

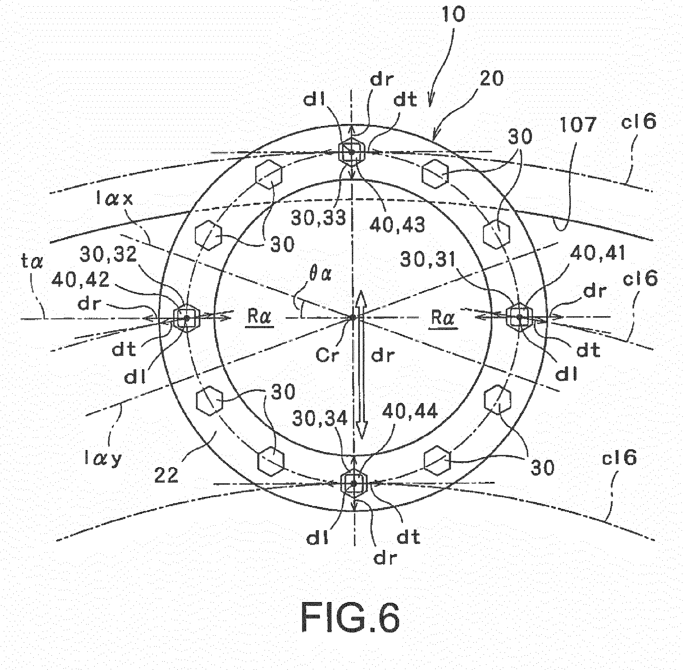

In the example shown in Figs. 5 and 6, the longitudinal axis Cb of the fastener 30 is parallel to the axis of rotation Cr of the windmill drive apparatus 10 and the central axis Cm of the ring gear 107. Namely, the longitudinal axis Cb of the fastener 30 is parallel to the aforementioned axial direction dl, and is perpendicular to the aforementioned tangent direction dt and the radial direction dr. In the illustrated example, the fastener 30 is very likely to change in state in any direction of the tangent direction dt, the radial direction dr and the axial direction dl, in other words, in the direction parallel to or perpendicular to the longitudinal axis Cb of the fastener 30. Thus, when the sensor 40 measures a change in state of the fastener 30 in these directions, a trouble state of the windmill drive apparatus 10 can be detected significantly promptly and significantly precisely.

In addition, in this embodiment, as shown in Fig. 6, the drive apparatus body 20 of the windmill drive apparatus 10 has the case 21 with the flange 22 through which the fasteners 30 penetrate, and the output shaft 24 having the meshing part 24a and supported on the case 21. The fasteners 30 are arranged on a circumference about the axis of the output shaft 24, i.e., on a circumference about the axis of rotation Cr of the windmill drive apparatus 10. The discrete sensors 40 each measure a change in state of the fastener 30 is provided correspondingly to the respective fasteners 30. By using these discrete sensors 40, the state of each of the fasteners 30 can be evaluated more precisely. In addition, from the measurement result of each sensor 40, it is possible to know a change in state of the corresponding fastener 30 more precisely, and further a change in mounting state of the windmill drive apparatus 10. As a result, a trouble state of the windmill drive apparatus can be detected significantly promptly and significantly precisely.

In addition, it is preferable that the sensor 40 measures a change in state of the fasteners 30 of at least one of a first fastener 31 located at a position nearest to one side along the circumference cl6 about the central axis Cm of the ring gear 107, a second fastener 32 located at a position nearest to the other side along the circumference cl6 about the central axis Cm of the ring gear 107, a third fastener 33 located at a position farthest from the central axis Cm of the ring gear 107 along the radial direction dr about the central axis Cm, and a fourth fastener 34 located at a position nearest to the central axis Cm of the ring gear 107 along the radial direction dr about the central axis Cm. Upon relative movement of the meshing part 24a of the windmill drive apparatus 10 and the ring gear 107, any of the first to fourth fasteners 31, 32, 33 and 34 is likely to change in state. Thus, by detecting a change in state of one or more of the first to fourth fasteners 31, 32, 33 and 34 by means of the sensor(s) 40, a trouble state of the windmill drive apparatus 10 can be detected more promptly and more precisely. Further, when the sensors 40 measure changes in states of all the first to fourth fasteners 31, 32, 33 and 34, a trouble state of the windmill drive apparatus can be detected significantly promptly and significantly precisely.

Particularly in the example shown in Fig. 6, a first sensor 41 is provided correspondingly to the first fastener 31 which is located at the position nearest to the one side along the circumference cl6 about the central axis Cm of the ring gear 107. In addition, a second sensor 42 is provided correspondingly to the second fastener 32 which is located at the position nearest to the other side along the circumference cl6 about the central axis Cm of the ring gear 107. Further, a third sensor 43 is provided correspondingly to the third fastener 33 which is located at the position farthest from the central axis Cm of the ring gear 107 along the radial direction dr about the central axis Cm, and a fourth sensor 44 is provided correspondingly to the fourth fastener 34 which is located at the position nearest to the central axis Cm of the ring gear 107 along the radial direction dr about the central axis Cm. In such a windmill drive apparatus 10, a change in state of each of the first to fourth fasteners 31, 32, 33 and 34, to which a largest load is likely to be applied, can be independently measured precisely by using the first to fourth sensors 41, 42, 43 and 44 that are discrete from each other. Thus, a trouble state of the windmill drive apparatus can be detected significantly promptly and significantly precisely.

More preferably, a change in state of the fastener 30, which is located in an area Rα in which a meshing pressure angle θα is within a predetermined angle range, e.g., the area Rα in which the meshing pressure angle θα is within a range of ±20°, is detected by the sensor 40. Still more preferably, a change in state of the fastener 30, which is located in the area Rα in which the meshing pressure angle θα is within a range of ±10°, is detected by the sensor 40. Most preferably, a change in state of the fastener 30, which is located in the area Rα in which the meshing pressure angle θα is 0°, is detected by the sensor 40. It could be confirmed that, from the simulation result, the fastener 30, which was located in the area Rα in which the meshing pressure angle θα was within a range of ±20°, was likely to change in state, that the fastener 30, which was located in the area Rα in which the meshing pressure angle θα was within a range of ±10°, was likely to significantly change in state, and that the fastener 30, which was located in the area Rα in which the meshing pressure angle θα was 0°, was likely to most largely change in state. In a plane perpendicular to the axis of rotation Cr of the output shaft 24 of the windmill drive apparatus 10 shown in Fig. 6, an angle of a straight line, which passes through the axis of rotation Cr with respect to a tangent line tα at the axis of rotation Cr to a circumference about the central axis Cm of the ring gear 107 and passing through the axis of rotation Cr of the output shaft 24, is referred to as the meshing pressure angle θα. In the example shown in Fig. 6, an area Rα which is surrounded by a straight line lαx and a straight line lαy is the area Rα in which the meshing pressure angle θα is within a range of ±20°. In the area Rα in which the meshing pressure angle θα is within a range of ±20°, the aforementioned third fastener 33 and the fourth fastener 34 are located.

Further, by comparing changes in states of the fasteners 30, whether the windmill drive apparatus 10 has a trouble or not may be judged. In particular, by comparing changes in states of two or more fasteners 30, which are located at symmetric positions about the axis of rotation Cr of the output shaft 24 of the windmill drive apparatus 10, whether the windmill drive apparatus 10 has a trouble or not may be judged. In this case, a trouble state of the windmill drive apparatus can be detected significantly promptly and significantly precisely.

As described above, in this embodiment, the windmill drive apparatus 10 has: the drive apparatus body 20 installed on one structure in the movable part of the windmill 101, the drive apparatus body 20 having the meshing part 24a configured to be meshed with the ring gear 107 installed on the other structure of the windmill 101, which structure is different from the movable part; the fastener 30 configured to fix the drive apparatus body 20 to the one structure, and the sensor 40 configured to measure a change in state of the fastener 30. According to such a windmill drive apparatus 10, a trouble state of the windmill drive apparatus can be detected promptly and precisely.

For example, in the above-described embodiment, a pair of the windmill drive units 5 are disposed on the part that rotates the nacelle 103 with respect to the tower 102, and each windmill drive apparatus unit 5 includes the three windmill drive apparatus 10. However, not limited to this example, only one windmill drive apparatus unit 5 or three or more windmill drive apparatus units 5 may be disposed on the movable part of the windmill 101. In addition, the windmill drive apparatus unit 5 may include two windmill drive apparatuses 10 or four or more windmill drive apparatuses 10.

## Claims

1. A windmill drive apparatus (10) comprising:
a drive apparatus body (20) installed on one structure (103a) in a movable part (103) of a windmill (101), the drive apparatus body (20) having a meshing part (24a) configured to be meshed with a ring gear (107) installed on another structure (102) of the windmill (101), which structure is different from the movable part (103); and
a fastener (30) configured to fix the drive apparatus body (20) to the one structure (103a),
**characterized by** further comprising:
a sensor (40) configured to measure a change in state of the fastener (30).

2. The windmill drive apparatus (10) according to claim 1, wherein
the sensor (40) is configured to measure at least one or more of:
a change in state of the fastener (30) in a tangent direction (dt) with respect to a circumference (cl6) about a central axis (Cm) of the ring gear (107);
a change in state of the fastener (30) in a radial direction (dr) about the central axis (Cm) of the ring gear (107); and
a change in state of the fastener (30) in a direction (dl) parallel to the central axis (Cm) of the ring gear (107).

3. The windmill drive apparatus (10) according to claim 1 or 2, wherein
the sensor (40) is configured to measure at least one or more of a change in state of the fastener (40) in a direction (dl) parallel to an axis (Cb) of the fastener (40), and a change in state of the fastener (30) in a direction (dr, dt) perpendicular to the axis (Cb) of the fastener (30).

4. The windmill drive apparatus (10) according to any one of claims 1 to 3, wherein:
the drive apparatus body (20) includes a case (21) having a flange (22) through which the fastener (30) penetrates, and an output shaft (24) having the meshing part (24a) and supported on the case (21);
the fastener (30) includes a plurality of the fasteners arranged on a circumference (cl3) about an axis (Cr) of the output shaft (24); and
the sensor (40) includes discrete sensors each configured to measure a change in state of the fastener (30) and being provided correspondingly to each of the fasteners (30).

5. The windmill drive apparatus (10) according to any one of claims 1 to 4, wherein:
the drive apparatus body (20) includes a case (21) having a flange (22) through which the fastener (30) penetrates, and an output shaft (24) having the meshing part (24a) and supported on the case (21);
the fastener (30) includes a plurality of the fasteners arranged on a circumference (cl3) about an axis (Cr) of the output shaft (24); and
the sensor (40) is configured to measure a change in state of at least one fastener (30) out of:
a fastener (31) located at a position nearest to one side along the circumference (cl6) about the central axis (Cm) of the ring gear (107);
a fastener (32) located at a position nearest to the other side along the circumference (cl6) about the central axis (Cm) of the ring gear (107);
a fastener (33) located at a position farthest from the central axis (Cm) of the ring gear (107) along a radial direction (dr) about the central axis (Cm); and
a fastener (34) located at a position nearest to the central axis (Cm) of the ring gear (107) along the radial direction (dr) about the central axis (Cm).

6. The windmill drive apparatus (10) according to any one of claims 1 to 5, wherein
the sensor (40) is configured to measure at least one or more of a load applied to the fastener (30), and a displacement or a position of the fastener (30).

7. A windmill drive apparatus unit (5) comprising a plurality of windmill drive apparatuses (10) provided on one movable part (103) of a windmill (101),
wherein:
each of the windmill drive apparatuses (10) is the windmill drive apparatus according to any one of claims 1 to 6; and
the sensor (40) includes discrete sensors configured to measure a change in state of the fastener (30) for mounting the windmill drive apparatus (10) and being provided correspondingly to each of the windmill drive apparatuses (10).

8. A windmill (101) comprising the windmill drive apparatus (10) according to any one of claims 1 to 6, or the windmill drive apparatus unit (5) according to claim 7.

## Patentansprüche

1. Windrad-Steuerungsvorrichtung (10), die umfasst:
einen Körper (20) der Steuerungsvorrichtung, der an einer Struktur (103a) in einem beweglichen Teil (103) eines Windrades (101) installiert ist, wobei der Körper (20) der Steuerungsvorrichtung einen Eingriffsteil (24a) aufweist, der so eingerichtet ist, dass er mit einem an einer anderen Struktur (102) des Windrades (101) installierten Zahnkranz (107) in Eingriff kommt, wobei sich die Struktur von dem beweglichen Teil (103) unterscheidet; und
ein Befestigungselement (30), das so eingerichtet ist, dass es den Körper (20) der Steuerungsvorrichtung an der einen Struktur (103a) befestigt,
**dadurch gekennzeichnet, dass** sie des Weiteren umfasst:
einen Sensor (40), der so eingerichtet ist, dass er eine Zustandsänderung des Befestigungselementes (30) misst.

2. Windrad-Steuerungsvorrichtung (10) nach Anspruch 1, wobei
der Sensor (40) so eingerichtet ist, dass er wenigstens eine oder mehrere der folgenden Änderungen misst:
eine Zustandsänderung des Befestigungselementes (30) in einer tangentialen Richtung (dt) in Bezug auf einen Umfang (cl6) um eine Mittelachse (Cm) des Zahnkranzes (107) herum;
eine Zustandsänderung des Befestigungselementes (30) in einer radialen Richtung (dr) um die Mittelachse (Cm) des Zahnkranzes (107) herum; sowie
eine Zustandsänderung des Befestigungselementes (30) in einer Richtung (dl) parallel zu der Mittelachse (Cm) des Zahnkranzes (107) herum.

3. Windrad-Steuerungsvorrichtung (10) nach Anspruch 1 oder 2, wobei
der Sensor (40) so eingerichtet ist, dass er eine Zustandsänderung des Befestigungselementes (40) in einer Richtung (dl) parallel zu einer Achse (Cb) des Befestigungselementes (40) oder/und eine Zustandsänderung des Befestigungselementes (30) in einer Richtung (dr, dt) senkrecht zu der Achse (Cb) des Befestigungselementes (30) misst.

4. Windrad-Steuerungsvorrichtung (10) nach einem der Ansprüche 1 bis 3, wobei:
der Körper (20) der Steuerungsvorrichtung ein Gehäuse (21) mit einem Flansch (22), den die Befestigungseinrichtung (30) durchdringt, und eine Abtriebswelle (24) enthält, die den Eingriffsteil (24a) aufweist und an dem Gehäuse (21) gelagert ist;
das Befestigungselement (30) eine Vielzahl der Befestigungselemente einschließt, die an einem Umfang (cl3) um eine Achse (Cr) der Ausgangswelle (24) herum angeordnet sind; und
der Sensor (40) einzelne Sensoren enthält, die jeweils so eingerichtet sind, dass sie eine Zustandsänderung des Befestigungselementes (30) messen, und die entsprechend für jedes der Befestigungselemente (30) vorhanden sind.

5. Windrad-Steuerungsvorrichtung (10) nach einem der Ansprüche 1 bis 4, wobei:
der Körper (20) der Steuerungsvorrichtung ein Gehäuse (21) mit einem Flansch (22), den das Befestigungselement (30) durchdringt, und eine Abtriebswelle (24) enthält, die den Eingriffsteil (24a) aufweist und an dem Gehäuse (21) gelagert ist;
das Befestigungselement (30) eine Vielzahl der Befestigungselemente einschließt, die an einem Umfang (cl3) um eine Achse (Cr) der Ausgangswelle (24) herum angeordnet sind; und
der Sensor (40) so eingerichtet ist, dass er eine Zustandsänderung wenigstens eines der folgenden Befestigungselemente (30) misst:
eines Befestigungselementes (31), das sich an einer Position befindet, die einer Seite entlang des Umfangs (cl6) um die Mittelachse (Cm) des Zahnkranzes (107) herum am nächsten liegt;
eines Befestigungselementes (32), das sich an einer Position befindet, die der anderen Seite entlang des Umfangs (cl6) um die Mittelachse (Cm) des Zahnkranzes (107) herum am nächsten liegt;
eines Befestigungselementes (33), das sich an einer Position befindet, die von der Mittelachse (Cm) des Zahnkranzes (107) entlang einer radialen Richtung (dr) um die Mittelachse (Cm) herum am weitesten entfernt ist; und
eines Befestigungselementes (34), das sich an einer Position befindet, die der Mittelachse (Cm) des Zahnkranzes (107) entlang der radialen Richtung (dr) um die Mittelachse (Cm) herum am nächsten liegt.

6. Windrad-Steuerungsvorrichtung (10) nach einem der Ansprüche 1 bis 5, wobei
der Sensor (40) so eingerichtet ist, dass er eine auf das Befestigungselement (30) wirkende Last oder/und eine Verschiebung oder eine Position des Befestigungselementes (30) misst.

7. Windrad-Steuerungsvorrichtungs-Einheit (5), die eine Vielzahl von Windrad-Steuerungsvorrichtungen (10) umfasst, die an einem beweglichen Teil (103) eines Windrades (101) vorhanden sind,
wobei:
jede der Windrad-Steuerungsvorrichtungen (10) die Windrad-Steuerungsvorrichtung nach einem der Ansprüche 1 bis 6 ist; und
der Sensor (40) einzelne Sensoren einschließt, die so eingerichtet sind, dass sie eine Zustandsänderung des Befestigungselementes (30) zum Anbringen der Windrad-Steuerungsvorrichtung (10) messen, und die entsprechend für jede der Windrad-Steuerungsvorrichtungen (10) vorhanden sind.

8. Windrad (101), das die Windrad-Steuerungsvorrichtung (10) nach einem der Ansprüche 1 bis 6 oder die Windrad-Steuerungsvorrichtungs-Einheit (5) nach Anspruch 7 umfasst.

## Revendications

1. Appareil d'entraînement d'éolienne (10) comprenant :
un corps d'appareil d'entraînement (20) installé sur une structure (103a) dans une partie mobile (103) d'une éolienne (101), le corps d'appareil d'entraînement (20) ayant une partie d'engrènement (24a) configurée pour s'engrener avec une couronne dentée (107) installée sur une autre structure (102) de l'éolienne (101), laquelle structure est différente de la partie mobile (103) ; et
un élément de fixation (30) configuré pour fixer le corps d'appareil d'entraînement (20) à ladite structure (103a),
**caractérisé en ce qu'**il comprend en outre :
un capteur (40) configuré pour mesurer un changement d'état de l'élément de fixation (30).

2. Appareil d'entraînement d'éolienne (10) selon la revendication 1, dans lequel
le capteur (40) est configuré pour mesurer au moins :
un changement d'état de l'élément de fixation (30) dans une direction tangente (dt) à une circonférence (cl6) autour d'un axe central (Cm) de la couronne dentée (107) ; et/ou
un changement d'état de l'élément de fixation (30) dans une direction radiale (dr) autour de l'axe central (Cm) de la couronne dentée (107) ; et/ou
un changement d'état de l'élément de fixation (30) dans une direction (dl) parallèle à l'axe central (Cm) de la couronne dentée (107).

3. Appareil d'entraînement d'éolienne (10) selon la revendication 1 ou 2, dans lequel
le capteur (40) est configuré pour mesurer au moins un changement d'état de l'élément de fixation (40) dans une direction (dl) parallèle à un axe (Cb) de l'élément de fixation (40) et/ou un changement d'état de l'élément de fixation (30) dans une direction (dr, dt) perpendiculaire à l'axe (Cb) de l'élément de fixation (30).

4. Appareil d'entraînement d'éolienne (10) selon l'une quelconque des revendications 1 à 3, dans lequel :
le corps d'appareil d'entraînement (20) comprend un boîtier (21) pourvu d'une bride (22) qui est traversée par l'élément de fixation (30), et un arbre de sortie (24) qui comporte la partie d'engrènement (24a) et est supporté sur le boîtier (21) ;
l'élément de fixation (30) inclut une pluralité des éléments de fixation agencés sur une circonférence (cl3) autour d'un axe (Cr) de l'arbre de sortie (24) ; et
le capteur (40) inclut des capteurs discrets configurés chacun pour mesurer un changement d'état de l'élément de fixation (30) et situés de manière correspondante à chacun des éléments de fixation (30).

5. Appareil d'entraînement d'éolienne (10) selon l'une quelconque revendication 1 à 4, dans lequel :
le corps d'appareil d'entraînement (20) comprend un boîtier (21) pourvu d'une bride (22) qui est traversée par l'élément de fixation (30), et un arbre de sortie (24) qui comporte la partie d'engrènement (24a) et est supporté sur le boîtier (21) ;
l'élément de fixation (30) inclut une pluralité des éléments de fixation agencés sur une circonférence (cl3) autour d'un axe (Cr) de l'arbre de sortie (24) ; et
le capteur (40) est configuré pour mesurer un changement d'état d'au moins un élément de fixation (30) parmi :
un élément de fixation (31) occupant une position la plus proche d'un côté le long de la circonférence (cl6) autour de l'axe central (Cm) de la couronne dentée (107) ;
un élément de fixation (32) occupant une position la plus proche de l'autre côté le long de la circonférence (cl6) autour de l'axe central (Cm) de la couronne dentée (107) ;
un élément de fixation (33) occupant une position la plus éloignée de l'axe central (Cm) de la couronne dentée (107) le long d'une direction radiale (dr) autour de l'axe central (Cm) ; et
un élément de fixation (34) occupant une position la plus proche de l'axe central (Cm) de la couronne dentée (107) le long de la direction radiale (dr) autour de l'axe central (Cm).

6. Appareil d'entraînement d'éolienne (10) selon l'une quelconque des revendications 1 à 5, dans lequel
le capteur (40) est configuré pour mesurer au moins une charge appliquée à l'élément de fixation (30) et/ou un déplacement ou une position de l'élément de fixation (30).

7. Ensemble appareil d'entraînement d'éolienne (5) comprenant une pluralité d'appareils d'entraînement d'éolienne (10) situés sur une partie mobile (103) d'une éolienne (101),
dans lequel :
chacun des appareils d'entraînement d'éolienne (10) est l'appareil d'entraînement d'éolienne selon l'une quelconque des revendications 1 à 6 ; et
le capteur (40) inclut des capteurs discrets configurés pour mesurer un changement d'état de l'élément de fixation (30) servant au montage de l'appareil d'entraînement d'éolienne (10) et situés de manière correspondante à chacun des appareils d'entraînement d'éolienne (10).

8. Éolienne (101) comprenant l'appareil d'entraînement d'éolienne (10) selon l'une quelconque des revendications 1 à 6, ou l'ensemble appareil d'entraînement d'éolienne (5) selon la revendication 7.
